(19) Europäisches Patentamt / European Patent Office / Office européen des brevets

(11) **EP 4 768 984 A1**

(12) **DEMANDE DE BREVET EUROPEEN**

(43) Date de publication:
**01.07.2026 Bulletin 2026/27**

(21) Numéro de dépôt: **25227280.2**

(22) Date de dépôt: **26.12.2025**

(51) Classification Internationale des Brevets (IPC):
**G01S 7/41** *(2006.01)* **G01S 7/487** *(2006.01)*
**G01S 13/72** *(2006.01)* **G01S 13/95** *(2006.01)*
**G01S 13/52** *(2006.01)*

(52) Classification Coopérative des Brevets (CPC):
**G01S 13/726; G01S 7/414; G01S 7/415;**
**G01S 7/487; G01S 7/4873; G01S 7/4876;**
**G01S 13/52; G01S 13/953; G01S 13/956**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **27.12.2024 FR 2415335**

(71) Demandeur: **THALES**
**92190 Meudon (FR)**

(72) Inventeurs:
• **LEGRAND, Léo**
  **33700 MERIGNAC (FR)**
• **GOY, Philippe**
  **33700 MERIGNAC (FR)**
• **VEYRAC, Yoan**
  **33700 MERIGNAC (FR)**

(74) Mandataire: **Lavoix**
**2, place d'Estienne d'Orves**
**75441 Paris Cedex 09 (FR)**

(54) **PROCÉDÉ, MIS EN OEUVRE PAR ORDINATEUR, DE CONTRÔLE AUTOMATIQUE DES FAUSSES ALARMES ; PROCÉDÉ DE TRAITEMENT D'UN SIGNAL RADAR ET PROGRAMME D ORDINATEUR ASSOCIÉS**

(57) Ce procédé de contrôle automatique des fausses alarmes dans une liste de plots (L1) correspondant à une sortie d'un traitement de détection (2) opérant sur un signal radar délivré par un radar d'observation maritime se caractérise par un traitement de pistage (34) permettant d'identifier les plots de la liste de plots correspondant vraisemblablement à un spike (LS), le traitement de pistage étant un traitement de pistage hiérarchique consistant, à un niveau le plus bas, à pister des spikes, et, à un niveau le plus haut, à pister des groupes de spikes, le pistage de spikes au niveau le plus bas étant réalisé conditionnellement au niveau le plus haut en fonction d'un paramètre commun caractéristique de chaque piste de groupe de spikes.

FIG.1

**Description**

L'invention a pour domaine celui des procédés de contrôle automatique des fausses alarmes, mis en œuvre dans une chaine de traitement des signaux radar pour la détection de cibles, pour des missions de surveillance maritime par exemple.

Une chaine de traitement classique est fondée sur la mise en œuvre d'un module de détection ou détecteur, par exemple un détecteur à taux de fausse alarme constant - TFAC (« constant false alarm rate » en anglais).

A ce détecteur est adjoint un ou plusieurs modules de traitements additionnels afin de confirmer, parmi les plots primaires issus du détecteur (aussi dénommés détections primaires), les plots correspondant à un objet d'intérêt. Par exemple, un extracteur cinématique est mis en œuvre qui réalise un traitement balayage à balayage permettant de filtrer les plots primaires sur plusieurs revisites d'une région du domaine radar durant un certain intervalle de temps afin de confirmer la présence d'un objet d'intérêt.

Un plot rassemble des informations dérivées des échos radar collectés, comme une position, une surface équivalente radar, etc. Si le radar possède un mode Doppler, un plot peut également contenir une information de vitesse radiale.

En aval de ces traitements de détection au sens large, la chaine de traitement comporte un module de pistage de cible, dont le but est d'assurer le suivi au cours du temps des objets d'intérêt au cours du temps à partir des plots confirmés. Ce module estime les caractéristiques cinématiques d'une cible comme sa position, sa vitesse, etc. Cette estimation est par exemple réalisée par un algorithme d'estimation du type filtre de Kalman.

Le module de pistage de cible produit par exemple une estimation de trajectoire à l'attention d'un opérateur du système radar ou du système de mission. Par exemple, cette trajectoire estimée est affichée sur une interface homme machine du système.

Parmi les plots (primaires ou confirmés), certains d'entre eux correspondent effectivement à des cibles, alors que d'autres correspondent à des fausses alarmes. Il s'agit de pics de puissance imputés soit au bruit thermique, soit à des échos radar issus d'un fouillis (sol, mer, atmosphérique).

Dans le cadre de la surveillance maritime, le fouillis de mer, constitué des rétrodiffusions du signal radar par la surface de la mer, est un grand pourvoyeur de fausses alarmes.

En particulier, des échos du fouillis de mer dont la puissance est comparable à celle des objets d'intérêt apparaissent à la surface de la mer.

Un tel écho est dénommé « spike ».

Le nombre de spikes dépend en fait de la sensibilité du détecteur.

Un spike apparaît dès qu'un écho du fouillis de mer présente un contraste supérieur au seuil de détection utilisé par le détecteur. Le contraste est une mesure de la puissance d'une case distance / récurrence sous test par rapport à l'ambiance environnante, par exemple la puissance moyenne autour de la case sous test.

Ceci est d'autant plus problématique lorsque le seuil de détection est bas et que l'ambiance est dominée par le bruit thermique.

Les spikes rentrent alors en compétition avec les objets d'intérêt dans les traitements qui suivent les traitements de détection, notamment le pistage de cible.

La régulation du taux d'occurrence des fausses alarmes est alors un défi majeur dans la conception des traitements radar.

Divers évènements physiques peuvent être à l'origine de ces spikes comme la cassure des vagues, des vagues qui se brisent sur des hauts fonds, des courants d'eau allant dans des directions différentes, des bourrasques de vent, etc. Bien que visibles en haute mer, ces phénomènes sont encore plus nombreux en zone littorale.

Selon la nature du phénomène engendrant des spikes, ceux-ci présentent des propriétés de persistance, d'apparition, de stationnarité, de vitesse spécifiques.

Pourtant ces propriétés présentent une telle variabilité qu'il reste difficile de concevoir un traitement adapté capable de séparer un spike d'une cible, en particulier en présence d'un fouillis de mer qualifié d'atypique.

Des procédés connus de contrôle des fausses alarmes se fondent sur une modélisation statistique du phénomène d'occurrence des spikes. Certaines modélisations statistiques classiques du fouillis de mer emploient une loi « à queue lourde », comme la loi K ou ses variantes plus élaborées multi-paramètres « KK » et « KA », pour représenter les probabilités d'apparition des spikes.

La loi K permet de modéliser un comportement « moyen » du fouillis de mer, avec une sous-évaluation de la probabilité d'apparition des spikes et leur niveau de puissance.

Les variantes plus élaborées (mais plus difficiles à manipuler car introduisant plus de paramètres statistiques) permettent de mieux modéliser l'apparition des spikes de très forte puissance.

Il s'agit ensuite de remonter les seuils de détection pour maintenir le taux d'occurrence des fausses alarmes sous une valeur de consigne.

Cependant, cela se fait au détriment de la détection des cibles d'intérêt.

Une autre approche consiste à exploiter la cohérence cinématique des cibles par rapport aux spikes, qui sont supposés être moins persistants dans le temps que les cibles, l'idée étant de pouvoir ainsi maintenir les seuils de détection à des niveaux suffisamment faibles pour permettre la détection des cibles d'intérêt.

L'extracteur cinématique vise ainsi à exclure les plots primaires correspondant à des spikes selon un critère complémentaire à celui de la puissance du signal renvoyé.

On connait également les procédés présentés respectivement dans la demande de brevet FR 3 081 053 A1 (qui présente un pistage de spike de mer), l'article de P. Reuillon et al. "Scan-to-scan sea-spikes filtering for radar", RADAR CONFERENCE (EURAD), 2010 EUROPEAN, IEEE, PISCATAWAY, NJ, USA, 30 septembre 2010 (2010-09-30), pages 272-275 (qui présente la caractérisation des cibles détectées en type de cible à partir des plots primaires et la détermination de l'environnement dans lequel les pistes sont détectés pour choisir l'algorithme de pistage adapté), et l'article SHI SAI-NAN et al. "Low-Velocity Small Target Detection With Doppler-Guided Retrospective Filter in High-Resolution Radar at Fast Scan Mode",IEEE TRANSACTIONS ON GEOSCIENCE AND REMOTE SENSING, IEEE, USA, vol. 57, no. 11, 1 novembre 2019 (2019-1101), pages 8937-8953 (qui divulgue un traitement pour identifier des petites cibles noyées dans le fouillis de mer).

Il s'agit donc de proposer des procédés alternatifs permettant le maintien des capacités de détection du radar par l'application de traitements et de seuils de détection adaptés à des environnements de fouillis de mer variés, tout en contrôlant le taux d'occurrence des fausses alarmes global constant.

Le but de l'invention est alors de répondre à ce problème.

A cet effet, l'invention a pour objet un procédé mis en œuvre par ordinateur, de contrôle automatique des fausses alarmes dans une liste de plots d'entrée correspondant à une sortie d'un procédé de traitement de détection opérant sur un signal radar délivré par un radar d'observation maritime, le procédé étant caractérisé en ce qu'il met en œuvre un traitement de pistage permettant d'identifier les plots de la liste de plots correspondant vraisemblablement à un spike, le traitement de pistage étant un traitement de pistage hiérarchique consistant, à un niveau le plus bas, à pister des spikes, et, à un niveau le plus haut, à pister des groupes de spikes, le pistage de spikes au niveau le plus bas étant réalisé conditionnellement au niveau le plus haut en fonction d'un paramètre commun caractéristique de chaque piste de groupe de spikes.

Suivant d'autres aspects avantageux de l'invention, le procédé comprend une ou plusieurs des caractéristiques suivantes, prises isolément ou suivant toutes les combinaisons techniquement possibles :

- le traitement de pistage est réalisé par la mise en œuvre d'un algorithme de pistage multi-groupe multi-spike, la sortie dudit algorithme étant un ensemble fini aléatoire haut niveau estimé, ledit ensemble indiquant notamment une vraisemblance qu'un plot de la liste de plots corresponde à un spike ;
- le paramètre caractéristique est une vitesse de groupe de spikes et/ou une longueur d'onde de groupe de spikes ;
- un spike est un phénomène à la surface de la mer qui donne lieu à un ou plusieurs échos radar puissants, ces échos radar conduisant à la génération de plots primaires ;
- le traitement de pistage est fondé sur l'hypothèse que les spikes résultent d'un ou plusieurs trains de houle ;
- la liste de plots est une liste de plots primaires délivrée en sortie du procédé de traitement de détection ou une liste de plots secondaires délivrée en sortie d'un autre procédé de contrôle automatique des fausses alarmes ;
- délivrant une liste de plots de spikes, chaque plot de la liste de plots de spikes ayant une vraisemblance supérieure à un seuil de coupure prédéfini ;
- un plot de la liste de plots de spikes est caractérisé par au moins une position et avantageusement par une vitesse, une vraisemblance de correspondre à un spike, un cardinal d'un groupe de spikes auquel appartient le plot considéré, et/ou une persistance d'une piste de spike à laquelle appartient le plot considéré.

L'invention concerne également un programme d'ordinateur comportant des instructions logicielles qui, lorsqu'elles sont exécutées par un ordinateur, mettent en œuvre un procédé tel que défini ci-dessus.

L'invention apparaîtra plus clairement à la lecture de la description détaillée qui va suivre, donnée uniquement à titre d'exemple non limitatif, et faite en référence aux dessins dans lesquels :

[Fig. 1] la figure 1 est une représentation schématique, sous forme de modules fonctionnels, d'une chaine de traitement des signaux radar, mettant en œuvre le procédé selon l'invention ;
[Fig. 2] la figure 2 est une représentation schématique d'un mode de réalisation d'un procédé de contrôle de la fausse alarme selon l'invention ;
[Fig. 3] la figure 3 est une représentation schématique permettant d'illustrer le principe sur lequel se fonde le procédé selon l'invention ;
[Fig. 4] la figure 4 est une représentation schématique de l'algorithme de pistage de groupe de spikes mis en œuvre dans le procédé de la figure 2 ; et,
[Fig. 5] la figure 5 est un graphe de la densité de probabilité du nombre de groupe de spikes identifiée lors de l'exécution de l'algorithme de la figure 4.

GENERALITES

Dans la présente demande, le terme de « spike » est utilisé pour désigner un phénomène à la surface de la mer qui donne lieu à un ou plusieurs échos radar puissants (c'est-à-dire à un ou plusieurs pics impulsionnels), ces échos radar faisant l'objet d'autant de détections par le détecteur de la chaine de traitement du signal radar (c'est-à-dire à la génération au cours du temps de plots primaires en sortie du détecteur). Un spike est donc ici un objet détectable (un réflecteur élémentaire), tout comme une cible.

Les traitements de l'état de la technique ne considèrent pas le fouillis de mer dans sa physique sous-jacente.

Mais, en faisant l'hypothèse qu'ils résultent d'un ou plusieurs trains de houle à la surface de la mer, les spikes doivent présenter une certaine corrélation entre eux, par exemple sur leur vitesse.

En se fondant sur cette hypothèse, il est alors envisageable d'introduire un contrôle des fausses alarmes fondé de pistage de groupe de spikes.

De manière générale, il s'agit d'un traitement de pistage hiérarchique consistant, au niveau le plus bas, à pister des spikes, et, au niveau le plus haut, à pister des groupes de spikes, le pistage des spikes au niveau le plus bas étant réalisé conditionnellement au niveau le plus haut qui définit la valeur d'un paramètre caractéristique de chaque groupe de spikes.

Le pistage de spike à partir des plots primaires permet d'estimer une valeur d'un paramètre commun pour chaque piste de spike, comme par exemple la valeur de la vitesse de chaque piste de spike.

Le pistage de groupe de spikes à partir des pistes de spike permet d'estimer la valeur du paramètre commun de chaque groupe de spikes, comme par exemple la valeur de la vitesse de chaque groupe de spikes.

Une piste de spike appartient à un groupe de spikes lorsque la valeur du paramètre commun de cette piste de spike est proche de la valeur du paramètre commun de ce groupe de spikes.

Dans le mode de réalisation préféré, ce traitement est réalisé par un algorithme qui traite ces différents niveaux de pistage simultanément dans un formalisme statistique adapté.

Les entrées de cet algorithme sont les plots primaires.

Le regroupement n'est pas une décision binarisée : chaque plot primaire appartient avec une certaine vraisemblance à un groupe de spikes.

La sortie de cet algorithme est une liste de plots ayant une forte probabilité de correspondre à des spikes. Elle est dénommée « liste de plots de spikes » ou, plus simplement « liste de spikes » dans la suite.

Cette liste de spikes permet ensuite de filtrer la liste des plots primaires pour obtenir une liste de plots confirmés.

La chaine de traitement intégrant le procédé selon l'invention prévoit par conséquent deux espaces de pistage, celui des cibles d'intérêt d'une part et celui des spikes d'autre part. L'acquisition d'information dans un des deux espaces de pistage permet d'alimenter le pistage dans l'autre espace. En particulier, lorsque l'on piste les cibles, il est avantageux de ne pas tenir compte des plots primaires que l'on sait correspondre à des spikes.

**FIGURE 1**

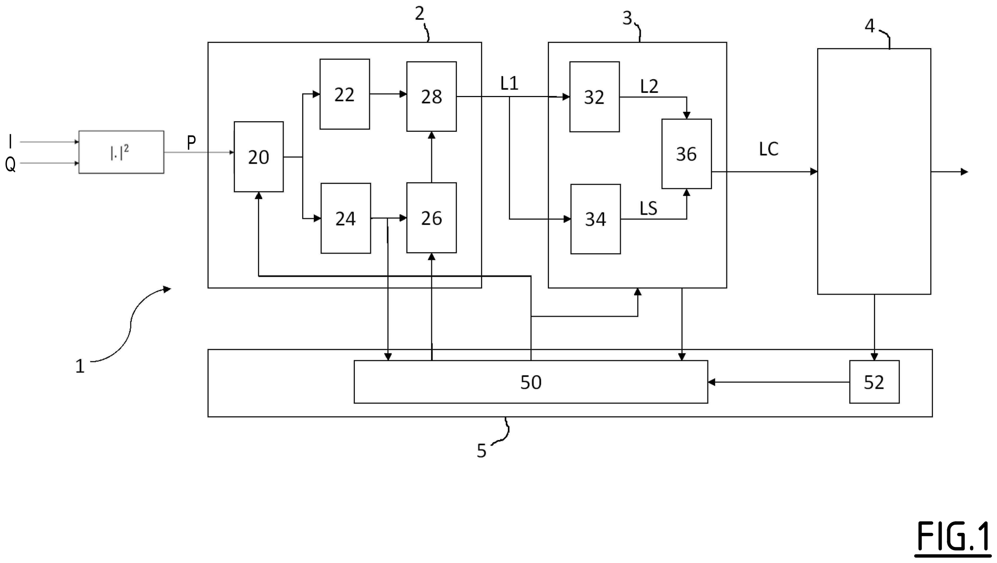

La figure 1 représente, sous forme de blocs fonctionnels, un mode de réalisation préféré d'une chaine de traitement 1 des signaux radar, en vue de la détection et du pistage de cibles, cette chaine de traitement étant adaptée pour mettre en œuvre le procédé selon l'invention.

La chaîne de traitement 1 est spécifique à l'emploi d'un radar dans un contexte maritime.

Elle prend en entrée un signal radar brut avantageusement prétraité (module de prétraitement 6). Le signal radar brut est généralement constitué d'un signal complexe représenté par ses composantes en phase, notée I, et en quadrature, notée Q. Un prétraitement usuel consiste à calculer la puissance de ce signal numérisé, notée P après traitement adapté à la forme d'onde radar.

La chaine de traitement 1 comporte :

- un détecteur 2, qui prend en entrée la puissance P du signal numérisé pour produire, à chaque pas d'échantillonnage, une liste de détections ou plots primaires, L1.
- un module de caractérisation des fausses alarmes 3, qui prend en entrée la liste de plots primaires L1 et délivre en sortie une liste de détections confirmées, ou plots confirmés, LC ; et,
- un module de pistage de cibles 4, prenant en entrée la liste de plots confirmés LC pour pister une ou plusieurs cibles d'intérêt.

Avantageusement, la chaine de traitement 1 comporte une boucle de rétroaction, prenant la forme d'un module 5 de calcul d'indicateurs globaux de fouillis de mer.

Le détecteur 2 est par exemple un détecteur à taux de fausse alarme constant - TFAC.

L'invention n'est pas spécifique d'un détecteur TFAC et s'applique à la suite de tout traitement de détection délivrant une liste de plots primaires.

Dans ce cas détecteur TFAC, le détecteur 2 comporte, de manière connue en soi, par exemple :

- un module 20 de moyenne du bruit ambiant ;
- un module 22 de calcul du contraste Z ;
- un module 24 de caractérisation locale du bruit ;
- un module 26 de recherche du seuil adapté ; et,
- un module 28 de seuillage.

Notamment, le module 28 de seuillage génère un plot primaire lorsque la valeur du contraste Z d'une case distance / récurrence sous test (telle que calculée en sortie du module 22) est supérieure au seuil de détection courant (tel que défini par le module 28 de seuillage).

Un plot primaire rassemble une pluralité d'informations mesurées. Il s'agit généralement d'une mesure de position, d'une mesure de surface équivalente radar, d'une mesure du rapport signal à ambiance, d'une valeur du seuil de détection associé, etc..

Eventuellement, la pluralité d'informations d'un plot primaire comporte une mesure de vitesse radiale lorsque celle-ci est mesurable sur la forme d'onde (c'est-à-dire lorsque le système radar emploie un mode Doppler)

Le module de caractérisation des fausses alarmes 3 met en œuvre un ou plusieurs traitements permettant de contrôler les fausses alarmes en filtrant la liste des plots primaires pour chercher à confirmer chacun de ces plots, c'est-à-dire à augmenter la probabilité qu'un plot primaire corresponde effectivement à une cible.

Par exemple, le module 3 comporte un module 32 mettant en œuvre un traitement de balayage à balayage pour filtrer la liste L1 de plots primaires et délivrer une liste L2 de plots secondaires.

Le traitement de balayage à balayage permet, par exemple, de filtrer les plots primaires issus du TFAC sur plusieurs revisites et aboutissant à la désignation de plots confirmés.

Le traitement de balayage à balayage mis en œuvre par le module 32 est par exemple un extracteur cinématique.

Selon l'invention, le module 3 comporte un module de pistage de groupes de spikes 34 propre à délivrer une liste de spikes LS.

Dans le mode de réalisation de la figure 1, le module 34 prend en entrée la liste L1 de plots primaires. Les modules 32 et 34 sont par conséquent disposés en parallèle l'un de l'autre.

Selon l'invention, le module 3 comporte un module de confirmation 36 permettant de filtrer une liste de plots en fonction des plots appartenant à la liste de spikes LS de manière à obtenir la liste LC des plots confirmés.

Dans le mode de réalisation de la figure 1, la liste de plots qui est filtrée est la liste L2 des plots secondaires, mais, en variante, il pourrait s'agir de la liste L1 des plots primaires.

En sortie de la fonction de détection au sens large (détection et contrôle des fausses alarmes), la chaine de traitement comporte généralement des fonctions supplémentaires de traitement de l'information, comme le pistage de cible, dont l'objectif est par exemple de produire un visuel à l'attention de l'opérateur du système radar ou du système de mission.

Ainsi, comme représenté sur la figure 1, la chaine de traitement 1 comporte un module de pistage de cible 4 dont le but est d'assurer le suivi des objets d'intérêt au cours du temps. Le pistage de cible peut également assurer, par filtrage (du type filtre de Kalman), l'estimation des caractéristiques cinématiques des pistes de cible, i.e. des objets d'intérêt, comme la position et la vitesse.

Le module 5 comporte par exemple un module 52 de calcul d'indicateurs de densité de cibles à partir d'information fournies par le module de pistage de cible 4.

Le module 5 comporte par exemple un module de calcul d'indicateurs globaux de fouillis de mer 50 à partir d'informations fournies en sortie du module 52 de calcul d'indicateurs de densité de cibles, du module 24 de caractéristiques locales du bruit, et avantageusement du module de calcul de la fausse alarme 3.

Les indicateurs globaux relatifs au fouillis calculés par le module 50 sont par exemple transmis au module 20 de calcul de la moyenne du bruit ambiant, au module 26 de recherche du seuil adapté, et/ou au module de calcul de la fausse alarme 3.

FIGURES 2 ET 3

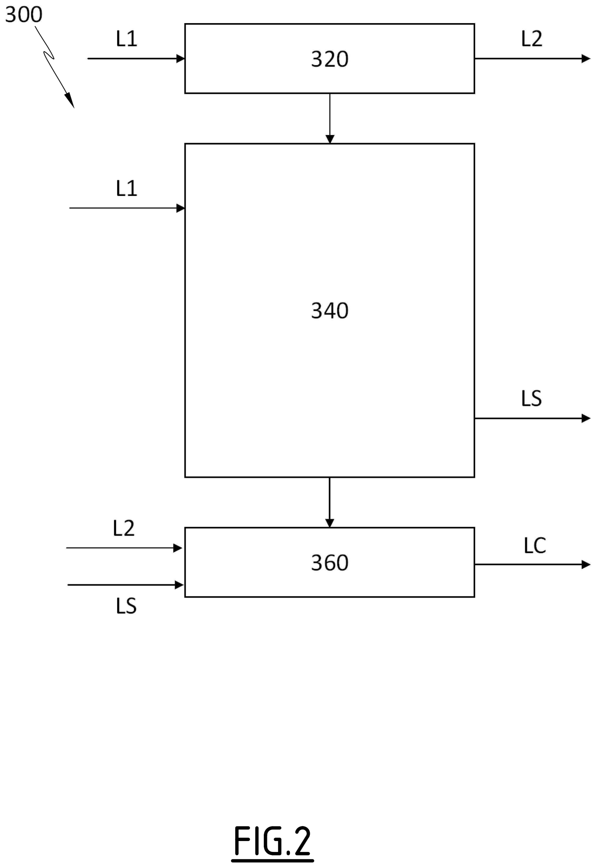

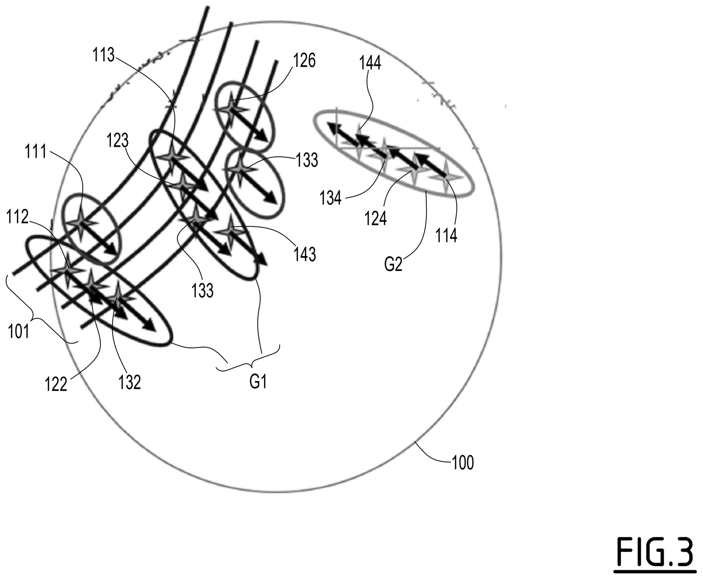

Les figures 2 et 3 permettent d'illustrer l'algorithme de pistage de groupe de spikes sur lequel se fonde le procédé selon l'invention.

La figure 2 représente, sous forme de blocs, un procédé 300 de contrôle automatique de la fausse alarme. Il correspond à l'exécution du module 3 de la figure 1.

La figure 3 illustre une zone géographique 100, qui est observée par le système radar à quatre instants successifs, les résultats de ces quatre instants d'observation étant représentés en superposition sur la figure 3.

Un train de houle 101 se propage à travers la zone géographique 100.

Certaines des vagues du train de houle 100 se brisent au cours de la période d'observation, occasionnant l'apparition de spikes.

Par exemple, au premier instant, des plots primaires 111, 112 et 113 sont détectés, qui correspondent dans la réalité à des spikes.

Par exemple, au second instant, des plots primaires 122, 123 et 126 sont détectés, qui correspondent dans la réalité à des spikes

Par exemple, au troisième instant, des plots primaires 132, 133 et 135 sont détectés, qui correspondent dans la réalité à des spikes

Par exemple, au quatrième instant, un plot primaire 143 est détecté, qui correspondent dans la réalité à des spikes

Parallèlement, une cible d'intérêt est présente dans la zone géographique 100. Des plots primaires 114, 124, 134 et 144, correspondant dans la réalité à cette cible, sont générés respectivement au premier, second, troisième et quatrième instants de la période d'observation.

Dans le mode de réalisation préféré, présenté ici en détail, le procédé 300 débute par une étape 320 de filtrage cinématique.

Elle correspond à l'exécution du module 32.

Elle consiste à appliquer un algorithme du type extracteur cinématique sur les plots de la première liste L1. Il s'agit par exemple d'un algorithme du type filtre de Kalman.

Pour chaque plot de la liste L1 à l'instant courant, l'extracteur cinématique utilise un filtre qui estime les pistes d'hypothétiques cibles, pistes ouvertes durant les instants précédents à partir des plots des listes L1 aux instants précédents. Si durant un certain intervalle de temps, une piste a été alimentée par un certain nombre de plots des instants précédents et le plot de l'instant courant, alors ce plot à l'instant courant est conservé et stocké dans la liste L2.

Par ailleurs, les plots de la première liste L1 à l'instant courant permettent de mettre à jour le filtre pour l'itération suivante de l'estimateur cinématique.

Ainsi, les pistes qui ne persistent pas sur un petit nombre de revisites du radar ne sont pas conservées. La seconde liste L2 contient donc les plots qui persistent au moins sur un nombre de balayages (typiquement deux tours). Ces plots correspondent plus certainement à une cible.

Sur la situation illustrée sur la figure 3, cela revient à supprimer les plots isolés, comme les plots 111, 126 et 135.

Le procédé 300 se poursuit par une étape de pistage de groupe de spikes 340. Elle correspond à l'exécution du module 34 de la figure 1.

Elle consiste à appliquer un algorithme de pistage de groupe de spikes sur les plots de la première liste L1 pour obtenir une liste de spike LS.

L'algorithme de pistage de groupe de spikes est un filtre qui estime, à partir des plots acquis à des instants passés, la probabilité qu'un plot acquis à l'instant courant, comme les plots 141 et 144, corresponde effectivement à un spike. Les plots acquis à l'instant courant permettent de mettre à jour l'estimateur pour l'itération suivante de l'étape 340.

Le procédé 340 exploite les valeurs d'un paramètre commun entre plusieurs pistes de plots primaires, ces plots étant acquis à différents instants, pour effectuer des regroupements entre les plots primaires et ainsi définir un ou plusieurs groupes de spikes.

Ainsi sur la figure 3, l'algorithme de pistage de groupe de spikes piste d'abord les spikes. Le pistage de spike s'effectue en estimant la vitesse d'un spike associé à la piste et en estimant la position de ce spike à l'instant courant, un plot détecté à l'instant courant confirmant cette piste de spike lorsque sa position est proche de la position estimée du spike.

Ainsi, par exemple, une piste de spike a été ouverte avec le plot 112 puis confirmée avec les plots 122 et 132. La valeur de la vitesse de cet objet d'intérêt est estimée à partir des postions des différents plots constitutifs de cette piste de spike.

Par exemple, une piste de spike a été ouverte avec le plot 113, puis confirmée avec les plot 123 et 133. La valeur de la vitesse de cet objet d'intérêt est estimée à partir des postions des différents plots constitutifs de cette piste de spike.

Par exemple, une piste de spike a été ouverte avec le plot 111, mais refermée puisqu'aucun plot primaire n'a pu être associé à cette piste aux instants d'observation suivants.

Par exemple, une piste de spike a été ouverte avec le plot 114, puis confirmée par les plots 124 et 134 aux instants suivants. La valeur de la vitesse de cet objet est estimée à partir des postions des différents plots constitutifs de cette piste de spike.

Puis, l'algorithme de pistage de groupe de spikes piste les groupes de spikes. Le pistage s'effectue en estimant la vitesse d'un groupe de spikes à l'instant courant, une piste de spike à l'instant courant confirmant cette piste de groupe de spikes lorsque sa vitesse est proche de la vitesse estimée du groupe de spikes.

Ainsi par exemple, une piste de groupe de spikes G1 est ouverte avec les pistes de spikes 112,122 et 132 d'une part et 113, 123, 133 d'autre part.

A l'instant suivant, lors de l'acquisition d'un nouveau plot, comme le plot 143, un calcul de vraisemblance entre les caractéristiques de ce nouveau plot et celles du groupe de spikes permet d'évaluer la probabilité que ce nouveau plot appartienne au groupe de spikes G1 et par conséquent qu'il s'agisse effectivement d'un spike plutôt qu'une cible.

En ce qui concerne les plots correspondant effectivement à une cible, les plots 114, 124, 134 et 144 sont regroupés dans un second groupe de spikes G2.

Cela permet de noter que, dans le présent procédé, la logique est inversée par rapport au pistage de cible, puisque les spikes sont maintenant les objets d'intérêts pistés, alors que les cibles font partie des fausses alarmes du point de vue du pistage multi-groupes multi-spikes.

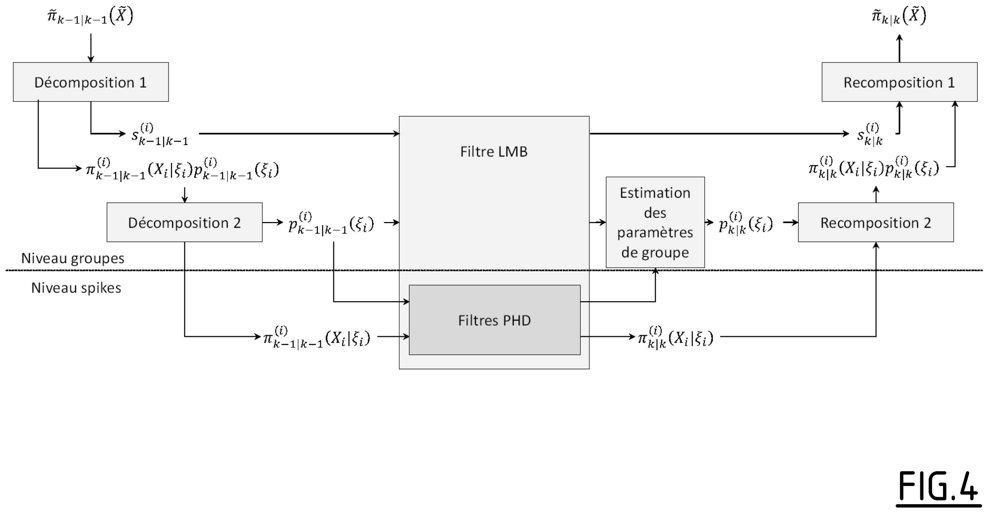

Le procédé de pistage de groupes de spikes du procédé associe à chaque plot de la liste L1 une vraisemblance d'être un spike. En fait le pistage de groupes de spikes produit un ensemble fini aléatoire estimé comme cela sera décrit plus en détails en relation avec la figure 4. Le procédé de pistage de groupes de spikes réalise une association probabiliste où tous les plots peuvent alimenter toutes les pistes.

En extrayant tout ou partie de l'information de cette ensemble fini aléatoire, la liste de spikes LS en sortie de l'étape 340 est avantageusement constituée.

La liste de spikes LS est par exemple la liste de plots primaires L1 qui correspondent avec une grande probabilité à des spikes. Dit autrement, le procédé de pistage de groupe de spikes associant à chaque plot de la liste L1 une vraisemblance d'être un spike, une probabilité de coupure est définie telle que les plots de la liste L1 avec une vraisemblance inférieure à cette probabilité de coupure ne sont pas retenus dans la liste de spikes et ceux avec une vraisemblance supérieure ou égale à cette probabilité de coupure sont retenus dans la liste de spikes.

En variante, la liste de spikes reprend l'ensemble des plots primaires de la liste L1 et leur associe un attribut supplémentaire correspondant à la vraisemblance d'être un spike telle que calculée par le procédé de pistage de groupe de spikes.

Eventuellement, d'autres informations sont ajoutées à chaque plot de la liste de spikes LS, comme une information de persistance de la piste de spike à laquelle appartient le plot considéré, ou le cardinal du groupe de spikes auquel appartient le plot considéré.

Le procédé 300 comporte une étape finale de confirmation 360 des informations obtenues en sortie des étapes d'extraction cinématique et de pistage de groupe de spikes afin d'obtenir une liste de plot confirmés LC.

L'étape de fusion correspond à l'exécution du module de confirmation 36.

Par exemple, la seconde liste de plots L2 est filtrée pour retirer les plots apparaissant dans la liste de spikes LS et obtenir ainsi une liste de plots confirmés LC. Chaque plot de cette liste correspond à une cible avec une plus grande probabilité.

D'autres critères de confirmation peuvent être mis en œuvre dans cette étape.

Par exemple, le module de confirmation 36 peut chercher à identifier dans la liste de spikes LS, les plots correspondant effectivement à des spikes et ceux correspondant effectivement à une cible.

Pour cela un premier critère consiste à considérer le cardinal des groupes de spikes en sortie du module 34. Si le cardinal d'un groupe de spikes est égal à l'unité, c'est-à-dire si un groupe ne contient qu'une piste de spike, alors la probabilité que les plots associés à ce groupe de spikes correspondent en fait à une cible est élevée. La situation qui échappe à ce critère serait un ensemble de cibles se déplaçant parallèlement avec sensiblement la même vitesse (cas de navires circulant le long d'un rail de navigation).

Pour cela un second critère consiste à considérer la persistance d'une piste de spike. En effet, une cible persiste sur des durées plus longues qu'une vague source de spikes. Un groupe de spikes est rempli d'estimateurs unitaires qui passent leur temps à naitre et à mourir, selon le temps de persistance d'une piste de spike. Le groupe de spikes persiste, même en l'absence momentanée de piste de spike, mais des pistes « à durée limitée » apparaissent et disparaissent sans cesse lorsqu'elles correspondent effectivement à des spikes. Ainsi la persistance d'une piste de spike sur une durée longue (par exemple supérieure à une dizaine de balayages successifs), augmente la probabilité que les plots de cette piste de spike correspondent en fait à une cible.

Pour cela un troisième critère consiste à considérer le secteur du domaine d'observation du système radar où sont détectés des spikes. En effet, les spikes sont répartis majoritairement dans le secteur contre le vent (« upwind ») sur l'ensemble des fronts de vague. Ainsi, la probabilité que les plots associés à un groupe de spikes soient hors de ce secteur fait augmenter la probabilité que ces plots correspondent en fait à une cible.

Après identification des spikes, les plots correspondant peuvent être rejetés de l'ensemble des plots servant à alimenter le procédé de pistage de cible.

Figure 4

Alors que l'algorithme a été présenté ci-dessus de manière « littéraire » et par conséquent approximative, dans ce qui suit, est présenté le formalise mathématique sur lequel s'appuie l'algorithme permettant d'estimer la probabilité qu'un plot primaire à l'instant courant soit un spike.

On définit, à un instant courant, un ensemble fini aléatoire haut niveau $\tilde{X}$, en tant que variable d'entrée de l'algorithme de pistage de groupe de spikes. Par « haut niveau », on entend le niveau le plus haut de la hiérarchique, i.e. le niveau groupe de spikes.

A l'instant courant, l'ensemble fini aléatoire haut niveau $\tilde{X}$ regroupe une pluralité de groupes de spikes $\begin{bmatrix} X_i \\ \xi_i \end{bmatrix}$, avec $i$ entier entre 1 et $\tilde{m}$ :

$$\tilde{X} = \left\{ \begin{bmatrix} X_1 \\ \xi_1 \end{bmatrix}, \dots, \begin{bmatrix} X_i \\ \xi_i \end{bmatrix}, \dots \begin{bmatrix} X_{\tilde{m}} \\ \xi_{\tilde{m}} \end{bmatrix} \right\}$$

Le nombre total $\tilde{m}$ de groupes de spikes est représenté au travers d'une distribution de probabilité $\tilde{\rho}$ sur le cardinal de $\tilde{X}$. On la note :

$$\tilde{\rho}(\tilde{m}) = P\big(Card(\tilde{X}) = \tilde{m}\big)$$

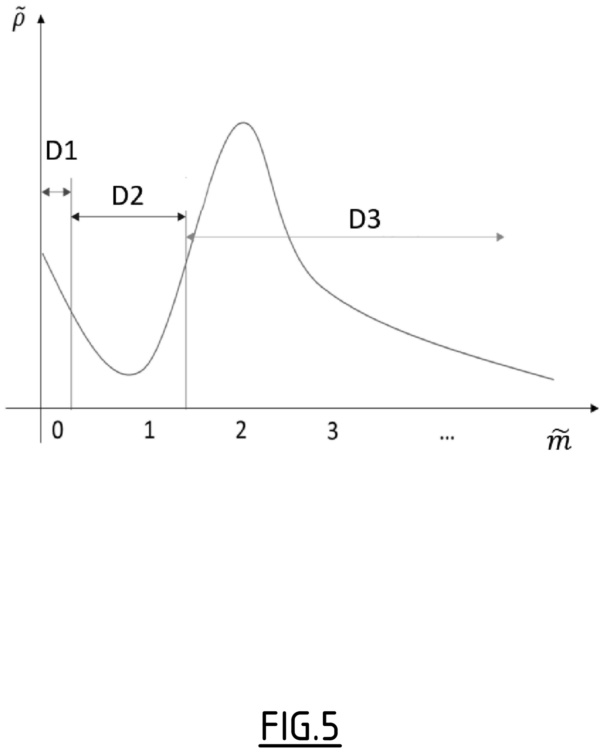

Un exemple de la distribution de probabilité $\tilde{\rho}$ est donné sur la figure 5.

Typiquement, le nombre de groupe de spikes est égal au nombre de trains de houle à la surface de la mer à l'intérieur du domaine observé par le système radar.

Un groupe de spikes $\begin{bmatrix} X_i \\ \xi_i \end{bmatrix}$ associe un ensemble fini aléatoire bas niveau $X_i$ et un ou plusieurs paramètres de groupe $\xi_i$. Par « bas niveau », on entend le niveau le plus bas de la hiérarchique, i.e. le niveau des spikes.

$X_i$ est un ensemble de vecteurs $\mathbf{x}^{(i,j)}$, $j$ entier entre 1 et $n_i$ :

$$X_i = \left\{ \mathbf{x}^{(i,1)}, \dots, \mathbf{x}^{(i,j)}, \dots, \mathbf{x}^{(i,n_i)} \right\}$$

**Chaque vecteur $\mathbf{x}^{(i,j)}$** correspond à une piste de spike ouverte à l'instant courant.

L'ensemble fini aléatoire bas niveau $X_i$ regroupe $n_i$ pistes.

Un paramètre de groupe $\xi_i$ est une caractéristique commune du groupe d'indice i. Il s'agit par exemple de la vitesse $v_i$ caractéristique du groupe de spikes.

À un instant courant $k$, les mesures, c'est-à-dire les informations associées aux plots primaires (par exemple de la première L1 ou de la seconde L2 selon la variante d'implémentation), peuvent être rassemblées dans l'ensemble fini aléatoire $Z_k$ :

$$Z_k = \{z_{k,1}, \ldots, z_{k,p}\} \text{ avec } p \in \mathbb{N},$$

où p est le nombre de mesures à l'instant courant k comprenant les objets d'intérêt et les fausses alarmes.

$z_{k,1}$ est le vecteur des mesures associées au plot de rang 1 dans la liste L1.

Une densité multi-groupes $\tilde{\pi}(\tilde{X})$ est définie, ainsi que le filtrage Bayésien associé. C'est la densité $\tilde{\pi}(\tilde{X})$ qui est prédite, puis mise à jour dans le filtrage.

La densité multi-groupes à l'instant précédent k-1, $\tilde{\pi}_{k-1|k-1}(\tilde{X}_{k-1})$, fait d'abord l'objet d'une prédiction, pour obtenir la densité $\tilde{\pi}_{k|k-1}(\tilde{X}_k)$.

L'utilisation de l'ensemble des mesures $Z_k$ permet alors de mettre à jour cette prédiction de manière à obtenir la densité à l'instant courant k, $\tilde{\pi}_{k|k}(\tilde{X}_k)$.

La densité multi-objet encapsule et propage les différentes hypothèses sur le nombre de groupes et la valeur estimée de leurs paramètres de groupe respectifs.

Le filtrage est par exemple une variante du filtrage Bayésien multi-groupes multi-cibles présenté dans le document Léo LEGRAND, Audrey GIREMUS, Eric GRIVEL, Laurent RATTON, Bernard JOSEPH, et Clément MAGNANT, "A hierarchical LMB/PHD filter for multiple groups of targets with coordinated motions", in 21th International Conference on Information Fusion, 2018, pour tenir compte notamment de la variation du nombre de groupes à chaque instant, i.e. de la distribution de probabilité $\tilde{\rho}(\tilde{m})$.

La figure 4 illustre le filtrage bayésien mis en œuvre en faisant apparaître la structure hiérarchique de l'algorithme. Selon cette hiérarchie, il s'agit de décomposer une premier fois la densité multi-groupes à l'instant $k - 1$ $\tilde{\pi}_{k-1|k-1}(\tilde{X}_{k-1})$.

Cette décomposition fait ressortir une probabilité d'existence de i^ème groupe de spikes, puisque le cardinal estimé $\tilde{m}$ varie dans le temps :

$$s_{k-1|k-1}^{(i)}$$

En faisant l'hypothèse de l'existence du i^ème groupe de spikes, caractérisé par un paramètre de groupe estimé $\xi_i$, le i^ème groupe de spikes est alors représenté par :

$$\pi_{k-1|k-1}^{(i)}(X_i|\xi_i) p_{k-1|k-1}^{(i)}(\xi_i)$$

Cette représentation permet de réaliser une seconde décomposition séparant la densité de probabilité $p_{k-1|k-1}^{(i)}(\xi_i)$ sur le paramètre de groupe $\xi_i$, qui traduit l'incertitude autour de la valeur estimée de ce paramètre de groupe et la densité multi-spikes à l'instant passé $\pi_{k-1|k-1}^{(i)}(X_i|\xi_i)$, conditionnellement définie au paramètre de groupe $\xi_i$.

Les différentes composantes, $s_{k-1|k-1}^{(i)}$, $\pi_{k-1|k-1}^{(i)}(X_i|\xi_i)$, $p_{k-1|k-1}^{(i)}(\xi_i)$, font ensuite l'objet d'une prédiction et d'une mise à jour en tenant comptes des mesures à l'instant courant $Z_k$.

Cette prédiction met en œuvre un filtre Bayésien incorporant une pluralité de filtres PHD (« probability hypothesis density filter » ou filtre de densité d'hypothèse de probabilité) comme décrit dans l'article précédemment cité.

Les filtres PHD se chargent de prédire et mettre à jour le pistage des groupes, c'est-à-dire $\pi_{k-1|k-1}^{(i)}(X_i|\xi_i)$ vers $\pi_{k|k}^{(i)}(X_i|\xi_i)$. Il y a un filtre PHD par groupe.

Pour chaque groupe, en combinant toutes les estimations de vitesse des spikes du groupe, on estime la densité sur le paramètre de groupe, c'est-à-dire $p_{k|k}^{(i)}(\xi_i)$.

Le filtre permettant cette estimation est le filtre de plus haut niveau hiérarchique, le filtre LMB (« labeled multi-Bernoulli » ou labélisé multi-Bernoulli) dans l'exemple.

Enfin, selon que l'hypothèse de groupe i a été alimentée, de manière vraisemblable par $Z_k$, la probabilité d'existence du groupe i est mise à jour pour obtenir donne $s_{k|k}^{(i)}$.

La densité multi-groupes multi-spikes à l'instant courant $\tilde{\pi}_{k|k}(\tilde{X}_k)$ est alors obtenue par une seconde recomposition permettant à partir de $\pi_{k|k}^{(i)}(X_i|\xi_i)$ et $p_{k|k}^{(i)}(\xi_i)$ d'obtenir $\pi_{k|k}^{(i)}(X_i|\xi_i) p_{k|k}^{(i)}(\xi_i)$, puis par une première recombinaison permettant à partir de $\pi_{k|k}^{(i)}(X_i|\xi_i) p_{k|k}^{(i)}(\xi_i)$ et $s_{k|k}^{(i)}$ d'obtenir $\tilde{\pi}_{k|k}(\tilde{X}_k)$.

Il est à souligner que les pistes de spikes persistent à l'intérieur du pistage des groupes de spikes. Chaque piste de spike est alimentée par tous les plots à l'instant courant. En pratique les cas peu vraisemblables ne sont cependant pas calculés entièrement.

Une sortie de l'algorithme est le calcul de la distribution sur le nombre de groupes $\tilde{\rho}(m)$. Cette distribution peut être interprétée comme un indicateur de la nature du fouillis de mer : mer calme (domaine D1 de la figure 5), fouillis océanique (domaine D2 de la figure 5) ou fouillis atypique (domaine D3 de la figure 5).

L'interprétation de la nature du fouillis de mer peut avoir des implications concrètes. La présence d'un fouillis atypique en particulier peut conduire à ajuster les paramètres des autres chaines de traitement radar, notamment via le module 5, l'ajustement des paramètres du détecteur 2.

Le pistage de groupe de spikes peut être utilisé seul ou en combinaison avec d'autres traitements, notamment les approches classiques de reconnaissance et classification, afin d'intégrer une information sur la nature des échos permettant de renforcer les traitements radar et/ou de contrôle de la fausse alarme dans une application de détection de cibles.

Le pistage de groupe de spikes peut être placé en parallèle et/ou en série de ces autres traitements.

La présente invention peut s'interfacer avec toute chaîne faisant apparaître des pré-plots ou plots primaires et des confirmations de ces plots ou plots confirmés, étant entendu qu'il s'agit de filtrer des spikes.

L'invention présente des applications dans les systèmes embarqués à bord des aéronefs, des navires de surface, des sous-marins, des satellites, et plus généralement toute plateforme nécessitant une détection/identification de cibles sur fond de fouillis de mer.

Le paramètre utilisé pour regrouper les spikes découle du phénomène physique sous-jacent à leur formation. Puisque les spikes sont consécutifs à des vagues qui elles-mêmes font partie d'un ou plusieurs trains de houle, la vitesse et/ou la période constituent des paramètres exploitables pour le regroupement.

Pour le cas où le paramètre commun utilisé comme critère de regroupement est la période (ou la longueur d'onde) du train de houle, on considère que les fronts de vague sont globalement orthogonaux au vecteur vitesse du train de houle.

Cependant, la forme du front de vague peut être une ligne droite perpendiculaire au vecteur vitesse du train de houle dans le cas d'un front d'onde plane (phénomène établi) ou une sorte d'arc de cercle dans le cas d'un front d'onde sphérique (phénomène transitoire).

Les positions des plots de liste L1 sont d'abord projetés par groupe sur l'axe défini par le vecteur vitesse du groupe de spikes.

Si un motif apparaît avec des agrégats de plots en certains points de l'axe, on peut valider l'hypothèse d'un front d'onde plane. La période de houle peut être estimée par la distance entre les agrégats de plots sur cet axe.

Si ce n'est pas le cas, l'opération de projection des plots est complexifiée. On peut par exemple effectuer des projections sur plusieurs axes, correspondant à la direction locale du vecteur vitesse du groupe de spikes. Le front de vague est ainsi localement une ligne droite et on peut alors estimer localement la période du train de houle. Les périodes locales sont ensuite recombinées pour obtenir une estimation globale de la période.

L'opération de projection sert à initialiser le paramètre commun $\xi_i$ de longueur d'onde utilisé dans le pistage de groupe au travers de la densité $p_{k|k}^{(i)}(\xi_i)$.

En fonction de cette hypothèse de densité, le pistage calcule la vraisemblance des mesures, c'est-à-dire les positions des plots de L1 en utilisant les modèles de projection définis ci-dessus.

Il est à souligner que la valeur du paramètre de regroupement est estimée lors du pistage de groupe de spikes.

Dans le cas de la vitesse, une vague se casse à l'instant k, et donne un premier plot de position mesurée (x1,y1) à la surface de la mer. A l'instant k+1, cette vague donne un second plot de position mesurée (x2, y2).

L'algorithme de pistage de groupe de spikes permet d'obtenir une estimation plus précise que ce calcul grossier.

Si l'on considère une seconde cassure de vague, avec des mesures (x1', y1') et (x2', y2'), les vecteurs vitesse respectifs, [vx, vy] et [vx', vy'] sont très proches.

En multipliant les mesures, parfois sur N instants de revisite, une vitesse de groupe de spikes est estimée.

L'utilisation d'un radar en mode Doppler fournit une mesure de la vitesse radiale relative, qui peut alimenter l'estimation de la vitesse, mais qui doit bien être différenciée de la vitesse estimée du phénomène causant les spikes.

Les « séries » de mesures ne se produisent pas en même temps dans le sens où une cassure de vague peut se produire dans un intervalle de temps donné et une autre cassure de vague peut se produire dans un autre intervalle. Les vecteurs vitesse sont cependant proches et l'algorithme de pistage de groupe permet de les identifier à un même groupe.

**Revendications**

1. Procédé, mis en œuvre par ordinateur, de contrôle automatique des fausses alarmes dans une liste de plots d'entrée correspondant à une sortie d'un procédé de traitement de détection opérant sur un signal radar délivré par un radar d'observation maritime, le procédé étant **caractérisé en ce qu'**il met en œuvre un traitement de pistage permettant d'identifier les plots de la liste de plots correspondant vraisemblablement à un spike, le traitement de pistage étant un traitement de pistage hiérarchique consistant, à un niveau le plus bas, à pister des spikes, et, à un niveau le plus haut, à pister des groupes de spikes, le pistage de spikes au niveau le plus bas étant réalisé conditionnellement au niveau le plus haut en fonction d'un paramètre commun caractéristique de chaque piste de groupe de spikes, un spike étant un phénomène à la surface de la mer qui donne lieu à un ou plusieurs échos radar puissants, ces échos radar conduisant à la génération de plots primaires.

2. Procédé selon la revendication 1, dans lequel le traitement de pistage est réalisé par la mise en œuvre d'un algorithme de pistage multi-groupe multi-spike, la sortie dudit algorithme étant un ensemble fini aléatoire haut niveau estimé ($\tilde{X}$), ledit ensemble indiquant notamment une vraisemblance qu'un plot de la liste de plots corresponde à un spike .

3. Procédé selon la revendication 1 ou la revendication 2, **caractérisé en ce que** le paramètre caractéristique est une vitesse de groupe de spikes et/ou une longueur d'onde de groupe de spikes.

4. Procédé selon l'une quelconque des revendications précédentes, dans lequel le traitement de pistage est fondé sur l'hypothèse que les spikes résultent d'un ou plusieurs trains de houle.

5. Procédé selon l'une quelconque des revendications précédentes, dans lequel la liste de plots est une liste de plots primaires délivrée en sortie du procédé de traitement de détection ou une liste de plots secondaires délivrée en sortie d'un autre procédé de contrôle automatique des fausses alarmes.

6. Procédé selon l'une quelconque des revendications précédentes, délivrant une liste de plots de spikes (LS), chaque plot de la liste de plots de spikes ayant une vraisemblance supérieure à un seuil de coupure prédéfini.

7. Procédé selon la revendications 6, dans lequel un plot de la liste de plots de spikes est **caractérisé par** au moins une position et avantageusement par une vitesse, une vraisemblance de correspondre à un spike, un cardinal d'un groupe de spikes auquel appartient le plot considéré, et/ou une persistance d'une piste de spike à laquelle appartient le plot considéré.

8. Procédé de traitement d'un signal radar délivré par un radar d'observation maritime, **caractérisé en ce qu'**il comporte :

   - appliquer un procédé de traitement de détection sur le signal radar pour produire une liste de plots primaires ;
   - appliquer un ensemble de procédés de contrôle automatique des fausses alarmes pour confirmer la liste de plots primaires et obtenir une liste de plots confirmés ;
   - appliquer un procédé de pistage de cible à partir de la liste de plots confirmés et/ ou ajuster des paramètres de configuration du procédé de traitement de détection en fonction du résultat du procédé de contrôle automatique des fausses alarmes,

   ledit ensemble de procédés de contrôle automatique des fausses alarmes comportant au moins un procédé conforme à l'une quelconque des revendications précédentes.

9. Programme d'ordinateur comportant des instructions logicielles qui, lorsqu'elles sont exécutées par un calculateur d'un système radar, mettent en œuvre un procédé selon l'une quelconque des revendications précédentes.

FIG.1

## FIG.2

**FIG.3**

$$\tilde{\pi}_{k-1|k-1}(\tilde{X})$$

$$\tilde{\pi}_{k|k}(\tilde{X})$$

Décomposition 1

Recomposition 1

$$s_{k-1|k-1}^{(i)}$$

Filtre LMB

$$s_{k|k}^{(i)}$$

$$\pi_{k-1|k-1}^{(i)}(X_i|\xi_i)p_{k-1|k-1}^{(i)}(\xi_i)$$

$$\pi_{k|k}^{(i)}(X_i|\xi_i)p_{k|k}^{(i)}(\xi_i)$$

Décomposition 2

$$p_{k-1|k-1}^{(i)}(\xi_i)$$

Estimation des paramètres de groupe

$$p_{k|k}^{(i)}(\xi_i)$$

Recomposition 2

Niveau groupes

Niveau spikes

Filtres PHD

$$\pi_{k-1|k-1}^{(i)}(X_i|\xi_i)$$

$$\pi_{k|k}^{(i)}(X_i|\xi_i)$$

FIG.4

$$\text{FIG.5}$$

**EP 4 768 984 A1**

Europäisches Patentamt

European Patent Office

Office européen des brevets

## RAPPORT DE RECHERCHE EUROPEENNE

Numéro de la demande

EP 25 22 7280

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | PHILIPPE REUILLON ET AL: "Scan-to-scan sea-spikes filtering for radar", RADAR CONFERENCE (EURAD), 2010 EUROPEAN, IEEE, PISCATAWAY, NJ, USA, 30 septembre 2010 (2010-09-30), pages 272-275, XP031784516, ISBN: 978-1-4244-7234-5 * le document en entier * | 1-9 | INV. G01S7/41 G01S7/487 G01S13/72 G01S13/95 G01S13/52 |
| | ----- | | |
| A | FR 3 081 053 A1 (THALES SA [FR]) 15 novembre 2019 (2019-11-15) * abrégé; revendication 1; figure 3 * | 1-9 | |
| | ----- | | |
| A | SHI SAI-NAN ET AL: "Low-Velocity Small Target Detection With Doppler-Guided Retrospective Filter in High-Resolution Radar at Fast Scan Mode", IEEE TRANSACTIONS ON GEOSCIENCE AND REMOTE SENSING, IEEE, USA, vol. 57, no. 11, 1 novembre 2019 (2019-11-01), pages 8937-8953, XP011755602, ISSN: 0196-2892, DOI: 10.1109/TGRS.2019.2923790 [extrait le 2019-10-29] * abrégé; figures 1,2 * | 1-9 | DOMAINES TECHNIQUES RECHERCHES (IPC) G01S |
| | ----- | | |

Le présent rapport a été établi pour toutes les revendications

| Lieu de la recherche | Date d'achèvement de la recherche | Examinateur |
|---|---|---|
| Munich | 20 avril 2026 | Mercier, Francois |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 22 7280

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-04-2026

| Document brevet cité au rapport de recherche | Date de publication | Membre(s) de la famille de brevet(s) | Date de publication |
|---|---|---|---|
| FR 3081053 A1 | 15-11-2019 | AU 2019203216 A1 | 28-11-2019 |
| | | EP 3567399 A1 | 13-11-2019 |
| | | FR 3081053 A1 | 15-11-2019 |
| | | JP 7339767 B2 | 06-09-2023 |
| | | JP 2019197051 A | 14-11-2019 |
| | | US 2019346552 A1 | 14-11-2019 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3081053 A1

**Littérature non-brevet citée dans la description**

- Scan-to-scan sea-spikes filtering for radar. **P. REUILLON et al.** RADAR CONFERENCE (EURAD), 2010 EUROPEAN. IEEE, 30 September 2010, 272-275
- Low-Velocity Small Target Detection With Doppler-Guided Retrospective Filter in High-Resolution Radar at Fast Scan Mode. **SHI SAI-NAN et al.** IEEE TRANSACTIONS ON GEOSCIENCE AND REMOTE SENSING. IEEE, 01 November 2019, vol. 57, 8937-8953
- **LÉO LEGRAND** ; **AUDREY GIREMUS** ; **ERIC GRIVEL** ; **LAURENT RATTON** ; **BERNARD JOSEPH** ; **CLÉMENT MAGNANT**. A hierarchical LMB/PHD filter for multiple groups of targets with coordinated motions. *21th International Conference on Information Fusion*, 2018